# FASCICULE DE BREVET EUROPEEN

(11) **EP 2 216 105 B1**
(45) Date de publication et mention de la délivrance du brevet: **10.08.2011**
(21) Numéro de dépôt: 10150978.4
(22) Date de dépôt: 18.01.2010
(51) Int. Cl.: B08B 7/02, B23Q 11/00, F26B 5/08

(54) **Procédé de nettoyage et de séchage d'une pièce usinée et système pour la mise en oeuvre du procédé**
Reinigungs- und Trocknungsverfahren eines bearbeiteten Werkstücks, und System zur Umsetzung dieses Verfahrens
Method for cleaning and drying a machined part and system for implementing this method

(30) Priorité: 05.02.2009 FR 0950700
(43) Date de publication de la demande: 11.08.2010
(73) Titulaire: Peugeot Citroën Automobiles SA, 78140 Vélizy-Villacoublay (FR)
(72) Inventeur: Vidal, Olivier, 42170 Saint Just Saint Rambert (FR)
(74) Mandataire: Fosse, Danièle

(56) Documents cités:
- WO-A-90/02002
- DE-A1- 3 814 014
- DE-A1- 10 153 087
- DE-A1- 10 336 390
- DE-B3- 10 312 023
- DE-C1- 10 150 594

## Description

La présente invention concerne un procédé de nettoyage et de séchage d'une pièce usinée, en particulier d'une pièce automobile telle qu'une culasse de moteur.

L'usinage d'une pièce est réalisé sur une ligne d'usinage par une suite d'opérations. Les opérations comprennent par exemple des opérations d'usinage, des opérations d'assemblage et des opérations de lavage/séchage des pièces.

Les opérations d'assemblage permettent par exemple de monter sur une pièce principale déjà usinée des composants qui doivent être usinés une fois en place sur cette pièce principale. Pour une culasse, la ligne d'usinage comprend généralement deux opérations d'assemblage : une première pour assembler des guides et des sièges de soupapes bruts et une deuxième pour assembler par vissage des chapeaux de paliers qui tiennent les arbres à cames.

Les pièces usinées qui sortent des opérations d'usinage sont sales : elles sont recouvertes de copeaux et liquide de coupe. Aussi, avant assemblage, les pièces usinées sont nettoyées et séchées par passage par une opération de lavage/séchage. Toutefois, les machines réalisant l'opération de lavage/séchage sont particulièrement encombrantes. En effet, le séchage est réalisé par évaporation, ce qui implique une longueur importante nécessaire au convoyage des pièces jusqu'à ce qu'elles soient sèches et à température ambiante. De plus, le séchage par évaporation est un processus long et très gourmand en énergie puisqu'il faut chauffer légèrement (environ 45°C) les pièces pour que l'eau s'évapore.

Le document FR-A-2 151 722 décrit une essoreuse de copeaux métalliques comprenant un tambour perforé tronconique d'axe horizontal ou sensiblement horizontal. Le tambour perforé tronconique est raccordé, du côté de sa petite base, à une alimentation en copeaux à essorer et, du côté de sa grande base, à une évacuation en copeaux essorés. L'essoreuse est animée alternativement d'un mouvement de rotation rapide et d'un mouvement de rotation lente à l'intérieur et au-dessus d'un carter récupérateur d'huile.

Le document EP-A-1 460 256 décrit un procédé d'assemblage d'un support arbre à cames. Une opération de lavage est prévue à la fin pour enlever les copeaux.

Le document US-A-2006 0168806 décrit un procédé d'usinage de pièces de fonderie avec un outil de coupe en carbure de tungstène ne nécessitant pas l'emploi d'un fluide de coupe.
Le document WO90/02002 décrit un système de nettoyage mettant une pièce en rotation autour de trois axes.

Toutefois aucun des documents n'enseigne de procédé de nettoyage et de séchage d'une pièce usinée qui réponde aux inconvénients cités plus haut.

Il y a donc un besoin pour un procédé de nettoyage et de séchage de pièces usinées qui soit peu encombrant à mettre en oeuvre, qui permette un nettoyage et un séchage rapides et qui soit économe en énergie.

Pour cela, l'invention propose un procédé de nettoyage et de séchage d'une pièce usinée par mise en mouvement de la pièce usinée selon la revendication 1.

Avantageusement, les rotations de la pièce usinée autour des différents axes de rotation sont réalisées simultanément.

Avantageusement, les rotations de la pièce usinée autour des différents axes de rotation sont réalisées successivement, le procédé comprenant un changement de fixation de la pièce usinée entre des rotations effectuées autour d'axes de rotation différents.

Avantageusement, la durée de centrifugation autour de chaque axe de rotation est comprise entre 20 et 30 secondes.

Avantageusement, la vitesse de rotation de la pièce usinée autour de chaque axe de rotation est comprise entre 300 et 1500 tours par minute.

La présente invention a également pour objet un procédé de fabrication d'une pièce automobile, comprenant une étape d'usinage de la pièce, une étape de nettoyage et de séchage de la pièce usinée selon le procédé défini précédemment et, une étape de lavage de la pièce usinée avant, ou pendant une partie de, l'étape de nettoyage et de séchage.

La présente invention a par ailleurs pour objet un système de nettoyage et de séchage d'une pièce usinée pour la mise en oeuvre du procédé défini précédemment, comprenant des organes d'entraînement en rotation de la pièce usinée de façon à nettoyer et sécher la pièce usinée par centrifugation.

Selon l'invention, les organes d'entraînement en rotation sont adaptés à entraîner en rotation la pièce autour d'au moins deux axes de rotation, de préférence trois axes, inclinés les uns par rapport aux autres, de préférence perpendiculaires les uns par rapport aux autres.

Dans une variante, les organes d'entraînement en rotation sont adaptés à entraîner en rotation la pièce usinée simultanément autour des différents axes de rotation.

Dans une variante, les organes d'entraînement en rotation sont adaptés à entraîner en rotation la pièce usinée successivement autour des différents axes de rotation.

Dans une variante, le système comprend en outre un dispositif de lavage de la pièce.

L'invention a également pour objet une machine d'usinage comprenant un système de nettoyage et séchage tel que défini précédemment et dans laquelle les axes de rotation sont des axes de la machine d'usinage.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe d'un exemple de système de nettoyage et de séchage ;
- figures 2a et 2b, des vues en coupe du système de la figure 1, monté sur un carter respectivement ouvert et fermé ;
- figure 3, une vue en coupe d'un autre exemple de système de nettoyage et de séchage.

L'invention se rapporte à un procédé de nettoyage et de séchage d'une pièce usinée par mise en mouvement de la pièce usinée.

Pendant la mise en mouvement de la pièce usinée, les copeaux d'usinage et le liquide de coupe sont évacués. Ainsi, un nettoyage (par évacuation des copeaux) et un séchage (par évacuation du liquide de coupe) efficaces et rapides sont effectués. De plus, le nettoyage et le séchage sont réalisés sans chauffage, ce qui permet de réaliser des économies d'énergie. Enfin, le procédé est peu encombrant à mettre en oeuvre puisqu'un convoyage n'est plus nécessaire pour le séchage.

La mise en mouvement de la pièce usinée est choisie parmi la centrifugation, la vibration en rotation, la vibration en translation, les déplacements linéaires alternatifs.

L'ensemble de ces exemples de mise en mouvement permet en effet d'évacuer rapidement et efficacement les copeaux d'usinage et le liquide de coupe, de façon économique en énergie et de façon peu encombrante.

La centrifugation comprend la rotation de la pièce usinée autour d'au moins deux axes de rotation. Ces axes de rotation sont inclinés les uns par rapport aux autres. La pièce usinée est ainsi soumise à une rotation autour de deux axes différents non parallèles entre eux. Cela permet d'évacuer les copeaux et le liquide de coupe plus efficacement.

Les axes de rotation sont de préférence au nombre de trois, ce qui est encore plus efficace qu'une rotation autour de deux axes.

Les axes de rotation peuvent être d'un nombre supérieur à trois, par exemple si la pièce est très complexe.

Les axes de rotation sont de préférence perpendiculaires les uns par rapport aux autres. Cela est particulièrement utile par exemple si la pièce a des axes perpendiculaires entre eux.

Les axes de rotation sont de préférence des axes de la pièce usinée. Ainsi, le nettoyage et le séchage de la pièce usinée, réalisés par centrifugation, sont plus efficaces. Une culasse, par exemple, est sensiblement parallélépipédique. Elle comprend un axe longitudinal et deux axes qui sont respectivement selon la largeur et l'épaisseur de la culasse. Ces trois axes sont perpendiculaires entre eux. L'entraînement en rotation d'une culasse autour de ces trois axes permet d'évacuer particulièrement efficacement et rapidement les copeaux et le liquide de coupe dus à l'usinage.

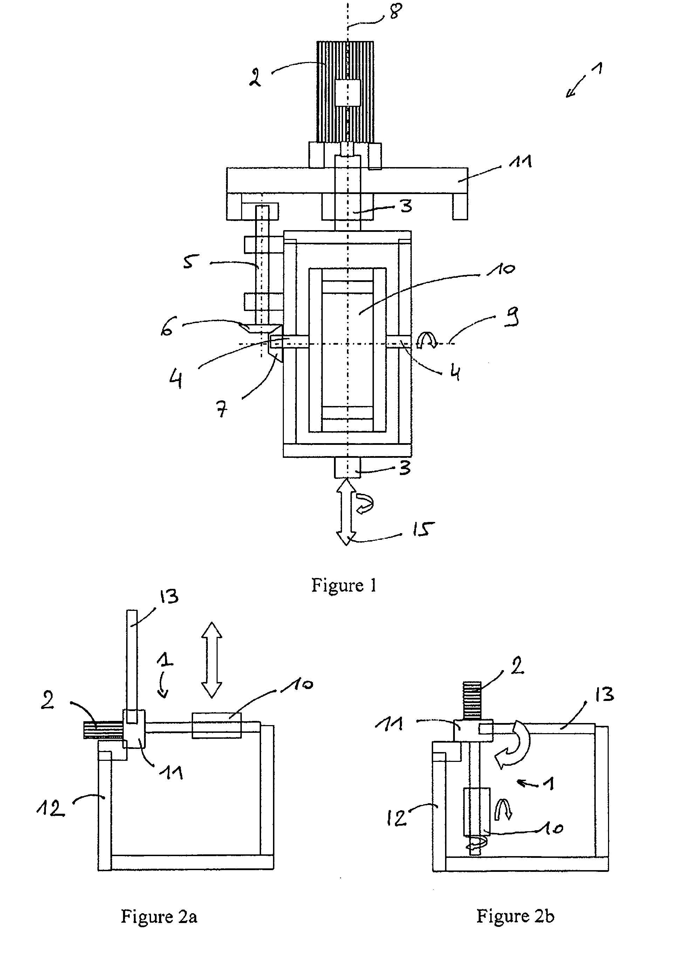

Dans un mode de réalisation préféré, illustré en particulier sur la figure 1, les rotations de la pièce usinée autour des différents axes de rotation sont réalisées simultanément. De cette façon, le procédé est particulièrement rapide. De plus, il est peu encombrant à mettre en oeuvre puisqu'un unique dispositif comme celui de la figure 1, détaillé plus loin, permet de mettre en oeuvre le procédé.

En variante, les rotations de la pièce usinée autour des différents axes de rotation sont réalisées successivement.

Dans cette variante, la pièce usinée subit un changement de fixation entre des rotations effectuées autour d'axes de rotation différents.

Ainsi, la pièce usinée est par exemple montée successivement sur le même axe de rotation d'un unique dispositif mais en alignant successivement des axes différents de la pièce sur l'axe de rotation du dispositif, afin de faire tourner la pièce usinée successivement autour des différents axes sélectionnés de la pièce. Cela permet de mettre en oeuvre le procédé sur un dispositif simple à fabriquer.

La pièce usinée peut, de façon alternative, être montée successivement sur autant de dispositifs qu'il y a d'axes de rotations. Chacun des dispositifs entraînera alors la pièce usinée en rotation autour d'un axe de rotation incliné par rapport aux axes de rotation des autres dispositifs.

Afin d'assurer l'évacuation des copeaux et du liquide de coupe, la durée de centrifugation autour de chaque axe de rotation est comprise entre 20 et 30 secondes. Lorsque les rotations autour des différents axes de rotation sont réalisées simultanément, la durée totale de la centrifugation est comprise entre 20 et 30 secondes. Le procédé de nettoyage et de séchage est alors très rapide. Lorsque trois rotations sont réalisées successivement, la durée totale de centrifugation est alors comprise entre 60 et 90 secondes, ce qui est également beaucoup plus rapide qu'un séchage par évaporation.

La vitesse de rotation de la pièce usinée autour de chaque axe de rotation est comprise entre 300 et 1500 tours par minute. Cette gamme de vitesse permet d'évacuer les-copeaux et le liquide de coupe.

Les durées et vitesses de rotation varient en particulier en fonction de la géométrie de la pièce à usiner.

Une pièce automobile, telle que par exemple une culasse de moteur, est fabriquée de la façon suivante. La pièce automobile subit au moins une opération d'usinage. Après chaque opération d'usinage, la pièce automobile est nettoyée et séchée par le procédé de nettoyage et de séchage décrit plus haut. Après une opération d'usinage, la pièce automobile est grasse du fait du liquide de coupe contenant de la graisse. La pièce automobile est donc lavée avec du liquide lessiviel pour la dégraisser, puis est nettoyée et séchée selon le procédé décrit plus haut. Cette opération de lavage peut être réalisée après chaque opération d'usinage, mais elle est de préférence réalisée uniquement après la dernière opération d'usinage de façon à économiser du temps et du liquide lessiviel, comme expliqué plus bas.

L'étape de lavage peut être réalisée avant la dernière étape de nettoyage et de séchage. En variante, l'étape de lavage est réalisée pendant une partie de l'étape de nettoyage et de séchage, de préférence au début pour pouvoir sécher la pièce correctement pendant la fin de l'étape de nettoyage et de séchage.

Le fait d'avoir une unique étape de lavage en fin de ligne d'usinage est particulièrement avantageux. Cela permet d'avoir une installation de lavage simple et peu coûteuse. Cela permet également de réduire la durée de fabrication de la pièce.

En effet, dans l'état de l'art, il est connu de laver la pièce après chaque étape d'usinage, ce qui oblige à prévoir une centrale et un réseau de liquide lessiviel en plus de la centrale et du réseau de liquide de coupe, ce qui entraîne une complexité et un coût important de l'installation. En outre, le lavage s'effectuant à l'eau chaude pour dégraisser, la température en sortie de la machine de lavage/séchage est élevée, ce qui oblige à temporiser la suite des opérations dans la ligne d'usinage.

En revanche, lorsqu'une unique étape de lavage est présente en fin de ligne d'usinage, comme décrit ici, la temporisation pour refroidir ne pénalise pas pour la suite des opérations puisque l'usinage est terminé.

Un système de nettoyage et de séchage d'une pièce usinée pour la mise en oeuvre du procédé décrit ci-dessus va maintenant être décrit.

Les références qui sont identiques sur les différentes figures représentent des éléments identiques ou similaires.

La figure 1 représente une vue en coupe d'un exemple de système 1 de nettoyage et de séchage.

Le système comprend des organes 2-4 d'entraînement en rotation de la pièce usinée 10 de façon à nettoyer et sécher la pièce usinée par centrifugation. Le système est peu encombrant et permet de nettoyer et sécher rapidement la pièce usinée.

Les organes 2-4 d'entraînement en rotation sont adaptés à entraîner en rotation la pièce autour d'au moins deux axes de rotation, de préférence trois axes, inclinés les uns par rapport aux autres, de préférence perpendiculaires les uns par rapport aux autres. Cela permet d'évacuer les copeaux et le liquide de coupe plus efficacement, comme expliqué plus haut pour le procédé.

Sur l'exemple particulier de la figure 1, les organes 2-4 entraînent la pièce en rotation autour de deux axes 8, 9 perpendiculaires entre eux.

Comme représenté sur la figure 1, les organes 2-4 d'entraînement en rotation peuvent être adaptés à entraîner en rotation la pièce usinée simultanément autour des différents axes de rotation. Cela permet de nettoyer et sécher la pièce usinée 11 de façon rapide et peu encombrante puisqu'un unique dispositif permet de mettre en oeuvre le procédé décrit plus haut.

La pièce usinée 10 est maintenue sur un châssis 11. Elle est monté sur les organes 3, 4, qui sont sur les axes 8, 9 de rotation, qui sont entraînés en rotation par un ou plusieurs moteurs.

Sur l'exemple de la figure 1, un unique moteur 2 entraîne les organes 3, 4 en rotation. Un des organes 3 d'entraînement en rotation est relié directement au moteur. L'autre organe 4 est relié au moteur via un dispositif 5-7 de transmission de la force du moteur 2. Ce dispositif 5-7 de transmission comprend une tige 5 reliée à la sortie du moteur 2. Cette tige 5 se termine par une roue dentée 6 engrenant sur une roue dentée 7 de l'organe 4.

En variante, le système peut comprendre plusieurs moteurs, chaque moteur entraînant un axe de rotation différent.

L'organe de rotation 3 peut être maintenu entièrement par le châssis 11 ou être maintenu entre le châssis 11 et une contrepointe 15.

Les figures 2a et 2b représentent des vues en coupe du système 1 de la figure 1, monté sur un carter 12 respectivement ouvert et fermé. Le châssis 11 du système de la figure 1 est monté articulé sur un carter 12. Un couvercle 13 adapté à fermer le carter, comme représenté sur la figure 2b, pour éviter les projections de copeaux et de liquide de coupe hors du carter. Le couvercle 13 est fixé au châssis 11. En position ouverte (figure 2a), le système 1 est à la place du couvercle. Cela permet de positionner facilement la pièce usinée sur le système 1. Une fois la pièce usinée 10 fixée sur les organes 3, 4 du système 1, le système 1 et le couvercle 13 sont basculés par l'intermédiaire du châssis 11, de façon à ce que le système 1 se trouve dans le carter et que le couvercle 13 ferme le carter. Les organes d'entraînement en rotation peuvent alors être mis en route pour nettoyer et sécher la pièce usinée 10.

Le système peut également comprendre des organes d'entraînement en rotation adaptés à entraîner en rotation la pièce usinée successivement autour des différents axes de rotation.

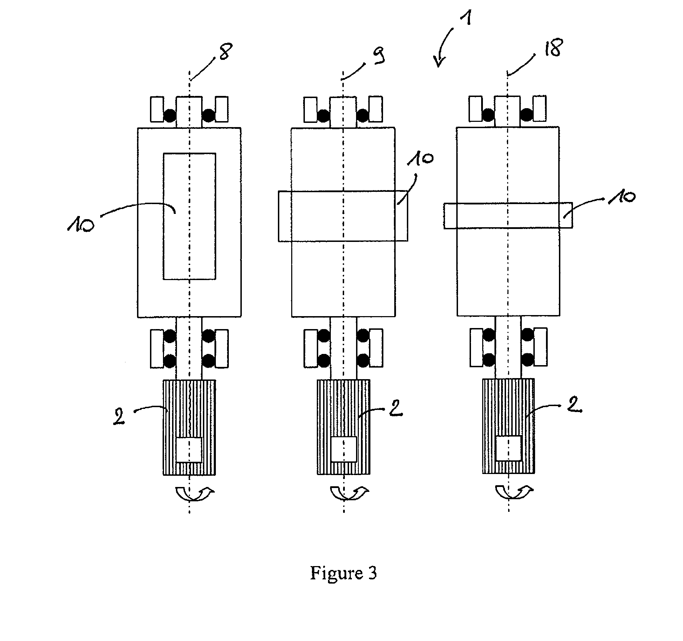

La figure 3 représente une vue en coupe d'un tel exemple de système de nettoyage et de séchage, avec des rotations successives.

Le système 1 comprend trois dispositifs d'entraînement en rotation de la pièce usinée 10. Le système 1 pourrait ne comprendre que deux dispositifs, si des rotations autour de seulement deux axes de rotations sont nécessaires. Chacun des dispositifs entraînent la pièce usinée autour d'un axe 8, 9, 18 de rotation différent. Entre chaque dispositif, la pièce est changée de fixation.

Sur la figure 3, les axes 8, 9 et 18 sont parallèles entre eux. Toutefois, la pièce usinée est montée sur chacun de ces dispositifs avec un axe de la pièce différents aligné avec l'axe de rotation 8, 9 et 18. Du point de vue de la pièce usinée, celle-ci tourne donc bien autour de trois axes perpendiculaires entre eux.

En variante de la figure 3, les rotations successives peuvent avoir lieu sur un unique dispositif comme expliqué plus haut, dans la partie concernant le procédé.

Le système peut en outre comprendre un dispositif de lavage de la pièce afin de dégraisser la pièce usinée, de préférence en fin de ligne d'usinage.

L'invention concerne également une machine d'usinage comprenant le système de nettoyage et séchage décrit plus haut, dans laquelle les axes de rotation sont des axes de la machine d'usinage.

## Revendications

1. Procédé de nettoyage et de séchage d'une pièce usinée par mise en mouvement par centrifugation de la pièce usinée, dans lequel la centrifugation comprend la rotation de la pièce usinée autour d'au moins deux axes de rotation, de préférence trois axes, inclinés les uns par rapport aux autres, de préférence perpendiculaires les uns par rapport aux autres.

2. Procédé selon la revendication 1, dans lequel les rotations de la pièce usinée autour des différents axes de rotation sont réalisées simultanément.

3. Procédé selon la revendication 2, dans lequel les rotations de la pièce usinée autour des différents axes de rotation sont réalisées successivement, le procédé comprenant un changement de fixation de la pièce usinée entre des rotations effectuées autour d'axes de rotation différents.

4. Procédé selon l'une des revendications 1 à 3, dans lequel la durée de centrifugation autour de chaque axe de rotation est comprise entre 20 et 30 secondes.

5. Procédé selon l'une des revendications 1 à 4, dans lequel la vitesse de rotation de la pièce usinée autour de chaque axe de rotation est comprise entre 300 et 1500 tours par minute.

6. Procédé de fabrication d'une pièce automobile, comprenant une étape d'usinage de la pièce, une étape de nettoyage et de séchage de la pièce usinée selon le procédé selon l'une des revendications 1 à 5 et, une étape de lavage de la pièce usinée avant, ou pendant une partie de, l'étape de nettoyage et de séchage.

7. Système (1) de nettoyage et de séchage d'une pièce usinée pour la mise en oeuvre du procédé selon l'une des revendications 1 à 5, comprenant des organes d'entraînement (2-4) en rotation de la pièce usinée de façon à nettoyer et sécher la pièce usinée par centrifugation,
dans lequel les organes d'entraînement en rotation sont adaptés à entraîner en rotation la pièce autour d'au moins deux axes de rotation (8, 9, 18), de préférence trois axes, inclinés les uns par rapport aux autres, de préférence perpendiculaires les uns par rapport aux autres.

8. Système (1) selon la revendication 7, dans lequel les organes d'entraînement en rotation sont adaptés à entraîner en rotation la pièce usinée simultanément autour des différents axes de rotation.

9. Système (1) selon la revendication 7, dans lequel les organes d'entraînement en rotation sont adaptés à entraîner en rotation la pièce usinée successivement autour des différents axes de rotation.

10. Système (1) selon l'une des revendications 7 à 9, comprenant en outre un dispositif de lavage de la pièce.

11. Machine d'usinage comprenant le système de nettoyage et séchage selon l'une des revendications 7 à 10, dans laquelle les axes de rotation sont des axes de la machine d'usinage.

## Claims

1. Method for cleaning and drying a machined part by setting into motion by centrifugation of the machined part, in which the centrifugation comprises the rotation of the machined part about at least two rotation axes, preferably three axes, inclined with respect to each other, preferably perpendicular with respect to each other.

2. Method according to Claim 1, in which the rotations of the machined part about the different rotation axes are realized simultaneously.

3. Method according to Claim 2, in which the rotations of the machined part about the different rotation axes are realized successively, the method comprising a change in the fixing of the machined part between rotations carried out about different rotation axes.

4. Method according to one of Claims 1 to 3, in which the duration of centrifugation about each rotation axis is comprised between 20 and 30 seconds.

5. Method according to one of Claims 1 to 4, in which the rotation speed of the machined part about each rotation axis is comprised between 300 and 1500 revolutions per minute.

6. Method for manufacturing an automobile part, comprising a stage of machining the part, a stage of cleaning and of drying the machined part according to the method according to one of Claims 1 to 5, and a stage of washing the machined part before or during a portion of the stage of cleaning and of drying.

7. System (1) of cleaning and of drying of a machined part for the implementation of the method according to one of Claims 1 to 5, comprising members (2-4) for entrainment in rotation of the machined part so as to clean and dry the machined part by centrifugation, in which the members for entrainment in rotation are adapted to entrain the part in rotation about at least two rotation axes (8, 9, 18), preferably three axes, inclined with respect to each other, preferably perpendicular with respect to each other.

8. System (1) according to Claim 7, in which the members for entrainment in rotation are adapted to entrain the machined part in rotation simultaneously about the different rotation axes.

9. System (1) according to Claim 7, in which the members for entrainment in rotation are adapted to entrain the machined part in rotation successively about the different rotation axes.

10. System (1) according to one of Claims 7 to 9, further comprising a device for washing the part.

11. Machining machine comprising the cleaning and drying system according to one of Claims 7 to 10, in which the rotation axes are axes of the machining machine.

## Patentansprüche

1. Verfahren zum Reinigen und Trocknen eines bearbeiteten Werkstücks durch Inbewegungversetzen durch Zentrifugieren des bearbeiteten Werkstücks, bei dem das Zentrifugieren das Drehen des bearbeiteten Werkstücks um mindestens zwei Rotationsachsen, vorzugsweise drei Achsen, die zueinander geneigt sind, vorzugsweise zueinander senkrecht sind, aufweist.

2. Verfahren nach Anspruch 1, bei dem die Rotationen des bearbeiteten Werkstücks um verschiedene Rotationsachsen gleichzeitig ausgeführt werden.

3. Verfahren nach Anspruch 2, bei dem die Rotationen des bearbeiteten Werkstücks um verschiedene Achsen nacheinander ausgeführt werden, wobei das Verfahren einen Befestigungswechsel des bearbeiteten Werkstücks zwischen Rotationen, die um verschiedene Rotationsachsen ausgeführt werden, aufweist.

4. Verfahren nach einem der Ansprüche 1 bis 3, bei dem die Dauer des Zentrifugierens um jede Rotationsachse zwischen 20 und 30 Sekunden liegt.

5. Verfahren nach einem der Ansprüche 1 bis 4, bei dem die Drehzahl des bearbeiteten Werkstücks um jede Rotationsachse zwischen 300 und 1500 Umdrehungen pro Minute liegt.

6. Verfahren zum Herstellen eines Kraftfahrzeugwerkstücks, das einen Bearbeitungsschritt des Werkstücks, einen Reinigungs- und Trockenschritt des bearbeiteten Werkstücks gemäß dem Verfahren nach einem der Ansprüche 1 bis 5 und einen Waschschritt des bearbeiteten Werkstücks vor oder während eines Teils des Reinigungs- und Trockenschritts aufweist.

7. System (1) zum Reinigen und Trocknen eines bearbeiteten Werkstücks zum Umsetzen des Verfahrens nach einem der Ansprüche 1 bis 5, das Organe (2-4) zum Antreiben des bearbeiteten Werkstücks in Drehung derart aufweist, dass das bearbeitete Werkstück durch Zentrifugieren gereinigt und getrocknet wird, bei dem die Organe das Werkstück um mindestens zwei Rotationsachsen (8, 9, 18), vorzugsweise drei Achsen, die zueinander geneigt sind, vorzugsweise zueinander senkrecht sind, in Drehung antreiben können.

8. System (1) nach Anspruch 7, bei dem die Organe zum Antreiben in Drehung das bearbeitete Werkstück gleichzeitig um verschiedene Rotationsachsen antreiben können.

9. System (1) nach Anspruch 7, bei dem die Organe zum Antreiben in Drehung das bearbeitete Werkstück nacheinander um verschiedene Rotationsachsen antreiben können.

10. System (1) nach einem der Ansprüche 7 bis 9, das ferner eine Waschvorrichtung des Werkstücks aufweist.

11. Bearbeitungsmaschine, die das Reinigungs- und Trockensystem nach einem der Ansprüche 7 bis 10 aufweist, in der die Rotationsachsen Achsen der Bearbeitungsmaschine sind.
